# FASCICULE DE BREVET EUROPEEN

(11) **EP 1 953 078 B1**
(45) Date de publication et mention de la délivrance du brevet: **05.08.2009**
(21) Numéro de dépôt: 07150123.3
(22) Date de dépôt: 19.12.2007
(51) Int. Cl.: B62K 25/28

(54) **Véhicule à deux roues à suspension arrière**
Fahrzeug mit zwei Rädern und Hinterradfederung
Two-wheel vehicle with rear suspension

(30) Priorité: 05.02.2007 FR 0753060
(43) Date de publication de la demande: 06.08.2008
(73) Titulaire: DECATHLON, 59650 Villeneuve d'Ascq (FR)
(72) Inventeur: Beaulieu, Cyril, 59000 Lille (FR); Garate, Zigor, 59260 Hellemmes (FR)
(74) Mandataire: Hennion, Jean-Claude

(56) Documents cités:
- DE-U1-3202006 013 47
- FR-A1- 2 827 831
- GB-A- 114 014
- US-A1- 2001 024 024

## Description

La présente invention a pour objet un véhicule à deux roues à suspension arrière. Elle trouve notamment son application dans le domaine des bicyclettes à suspension arrière, et plus particulièrement des vélos tout-terrain, désignés couramment par le terme VTT, à suspension arrière.

Le document DE 20 2006 013473 U est considéré comme étant l'état de la technique le plus proche selon le préambule de la revendication 1.

Un VTT peut comporter de manière conventionnelle deux suspensions, une suspension avant et une suspension arrière. La suspension avant peut consister en une fourche télescopique. La suspension arrière, quant à elle, comporte un ensemble oscillant et un système amortisseur. L'ensemble oscillant, qui supporte la roue arrière, est relié au châssis avant du VTT par une ou plusieurs liaisons pivotantes. Le système amortisseur a pour fonction de réaliser la suspension élastique du châssis du VTT, supportant l'utilisateur, tout en assurant l'amortissement des chocs consécutifs au débattement de la roue arrière. La ou les liaisons pivotantes ont pour fonction de guider le mouvement de débattement de la roue arrière du fait des irrégularités du terrain.

Dans un premier type de suspension arrière, le boîtier de pédalier fait partie intégrante de l'ensemble oscillant, de sorte que la suspension n'a aucune influence directe sur la transmission. En effet, quelque soit le débattement de la roue arrière, la distance entre le boîtier de pédalier et l'axe de la roue reste constante.

Dans un deuxième type de suspension arrière, le boîtier de pédalier fait partie intégrante du châssis, de sorte que la suspension influe sur la transmission. En effet, lors du débattement de la roue arrière, on constate une variation de la distance entre le boîtier de pédalier et l'axe de la roue arrière.

Cette interaction entre la suspension et la transmission peut provoquer ce que l'on appelle couramment l'effet de pompage qui se traduit par un déplacement indésirable du châssis, qui s'enfonce et se soulève, sous l'effet d'un pédalage énergique.

Plus précisément, la variation de la longueur de chaîne lors du débattement de la roue arrière peut agir sur la transmission. En effet, la tension de la chaîne peut agir sur la suspension et induire l'effet de pompage mentionné plus haut.

On connaît, notamment du document FR 2 827 831, des véhicules à deux roues à suspension arrière, à deux liaisons pivotantes, dans lesquels le boîtier de pédalier fait partie intégrante du châssis avant. La suspension arrière est composé d'une première biellette rigide constituant la première liaison pivotante, et d'une deuxième biellette rigide ou d'un excentrique circulaire constituant la deuxième liaison pivotante, ainsi que d'un système amortisseur. Les deux liaisons pivotantes relient chacune l'ensemble oscillant portant la roue arrière au châssis avant.

Avec des VTT équipés de tels systèmes de suspension, le point de pivot haut de la première liaison pivotante relie cette dernière à l'ensemble oscillant arrière, et son point de pivot bas la relie au châssis avant.

Le problème qui se pose alors et que le système de suspension n'est efficace contre l'effet de pompage que sur une partie du débattement de la roue arrière.

En effet, le déplacement du point de pivot virtuel, également appelé centre instantané de rotation, défini comme l'intersection de la droite passant par les deux points de pivots de la première liaison pivotante et la droite passant par les deux points de pivots de la deuxième liaison pivotante, s'éloigne de la ligne de chaîne, de l'avant vers l'arrière.

Or, si ce centre instantané de rotation s'éloigne de la ligne de chaîne vers le haut, la transmission tend à durcir la suspension en la comprimant, et induit donc l'effet de pompage.

Ces systèmes ne permettent donc pas de maintenir le centre instantané de rotation dans un espace suffisamment proche de la ligne de chaîne, et ne limitent donc pas suffisamment l'effet de pompage, tout au long du débattement de la roue arrière lors de la compression ou décompression du système amortisseur.

L'objet de l'invention est donc d'apporter une solution au problème précité parmi d'autres problèmes.

L'invention se rapporte donc, selon un premier aspect, à un véhicule à deux roues, notamment une bicyclette ou un VTT, équipé d'une suspension arrière.

La suspension arrière comporte un châssis avant portant un boîtier de pédalier, et un ensemble arrière oscillant portant une roue arrière motrice.

L'ensemble arrière oscillant est solidaire du châssis avant par un système amortisseur, une liaison pivotante supérieure présentant un point de pivot haut et un point de pivot bas, et une liaison pivotante inférieure présentant un point de pivot arrière et un point de pivot avant.

De façon caractéristique, le point de pivot haut relie la liaison pivotante supérieure au châssis avant, le point de pivot bas relie cette liaison pivotante supérieure à l'ensemble oscillant arrière, le point de pivot arrière relie la liaison pivotante inférieure au châssis avant, le point de pivot avant relie la liaison pivotante inférieure à l'ensemble oscillant arrière, de sorte que, en cours de compression du système amortisseur, la liaison pivotante supérieure oscille, par rapport au châssis, autour d'un axe sensiblement perpendiculaire à la ligne de chaîne, et la trajectoire du point d'intersection entre la droite passant par les deux points pivot haut et bas et la droite passant par les deux points pivot arrière et avant se déplace de l'arrière vers l'avant du véhicule dans une bande sensiblement parallèle à et à distance minimale de la ligne de chaîne.

Des variantes de réalisation sont présentées ci-après, qui peuvent être considérées seules ou en combinaison.

La droite passant par les deux points de pivot arrière et avant est sensiblement parallèle à la ligne de chaîne.

La liaison pivotante inférieure est formée par un excentrique circulaire constitué dans un boîtier portant un axe excentré de part et d'autre du boîtier, ou par une bielle.

Le point de pivot arrière est situé entre deux droites sensiblement parallèles à la ligne de chaîne, tangentes respectivement au plus petit et au plus grand plateau de chaîne.

Le point intersection entre la droite passant par les deux points pivot haut et bas et la droite passant par les deux points pivot arrière et avant, reste en arrière de l'axe du boîtier de pédalier pendant les 30, de préférence les 25, premiers pourcents de la compression du système amortisseur.

La liaison pivotante supérieure est formée par une bielle.

Le point de pivot haut se trouve à proximité de l'extrémité arrière du tube supérieur formant partie supérieure avant du châssis avant.

Le point de pivot bas se trouve au niveau de ou à proximité de la jonction entre le hauban formant partie supérieure arrière de l'ensemble arrière oscillant, et le tube de renfort formant partie supérieure avant de cet ensemble oscillant arrière.

Le point de pivot arrière se trouve à proximité de l'extrémité inférieure soit du tube de selle formant partie arrière du châssis avant, soit du tube diagonal formant partie inférieure avant du châssis avant.

Le point de pivot avant se trouve à proximité de ou au niveau de la jonction entre le tube de renfort formant partie avant de l'ensemble arrière oscillant et le tube de base formant partie inférieure arrière de cet ensemble arrière oscillant.

L'invention permet donc avantageusement de maintenir le centre instantané de rotation dans un à distance minimale de la ligne de chaîne, limitant le phénomène de pompage tout au long du débattement de la roue arrière au cours de la compression ou décompression du système amortisseur.

D'autres caractéristiques et avantages de l'invention apparaîtront plus clairement et de manière complète à la lecture de la description ci-après des variantes préférées de réalisation du système, lesquelles sont données à titre d'exemples non limitatifs et en référence aux dessins annexés suivants.
- figures 1 à 4 : représentent schématiquement un VTT en vue partielle, en particulier le châssis avant et l'ensemble arrière oscillant,
- figure 5 : représente schématiquement le VTT des figures 1 à 4 dans son état statique non chargé,
- figure 6 : représente schématiquement le VTT des figures 1 à 4 dans son état statique chargé,
- figure 7 : représente la trajectoire du centre instantané de rotation dans le plan du châssis avant.

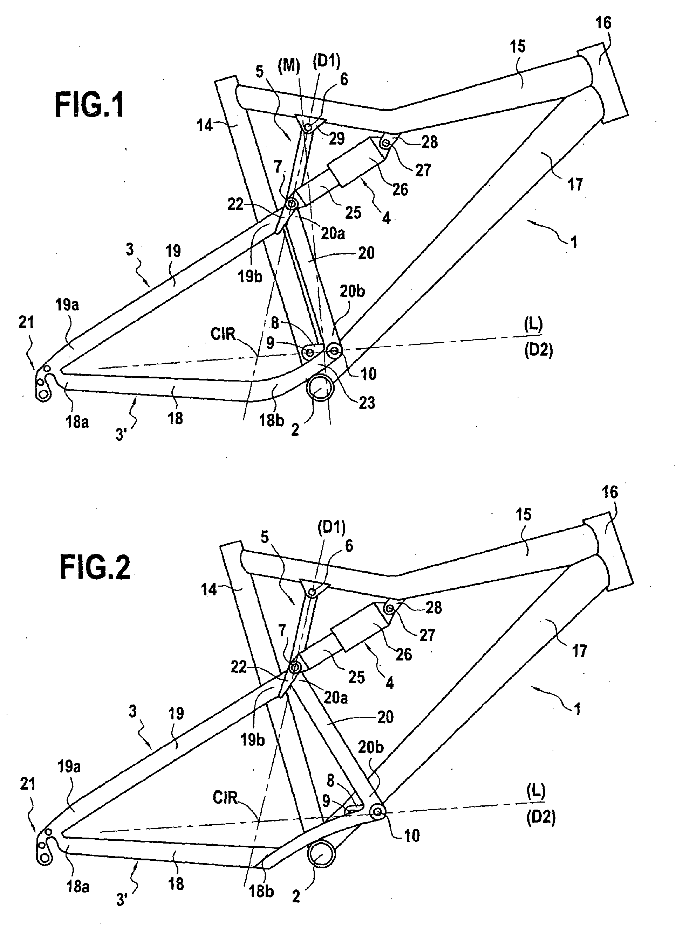

Le VTT à suspension arrière qui est partiellement représenté aux figures 1 à 4 comprend un châssis avant 1, de structure relativement conventionnelle, et un ensemble arrière oscillant 3.

Le châssis avant 1 est constitué de quatre tubes, respectivement le tube de selle 14, le tube supérieur 15, le tube de direction 16 et le tube diagonal 17. Le boîtier de pédalier 2 est monté dans un logement formé à l'extrémité inférieure du tube de selle 14, à l'intersection de ce dernier avec le tube diagonal 17.

Le tube supérieur peut ne pas être droit, comme cela est représenté aux figures 1 à 4, mais présenté un angle.

L'ensemble arrière oscillant 3 supporte la roue arrière motrice, non représentée. Il est constitué de deux sous-ensembles 3' dont l'un est visible sur la figure 1, disposés de part et d'autre du plan médian du châssis avant 1 et reliés l'un à l'autre, notamment au niveau des deux liaisons pivotantes comme cela sera expliqué ci-après.

Chaque sous-ensemble 3' a une configuration globalement triangulaire, avec un tube de base 18, un hauban 19 et un tube de renfort 20. Les parties arrière respectivement 18a et 19a du tube de base 18 et du hauban 19 sont terminées par une pièce de raccordement 21 qui sert au montage de la roue arrière.

La partie avant 19b du hauban 19 et la partie haute 20a du tube de renfort 20 sont raccordées par une pièce 22, faisant office de sommet du triangle matérialisé par les trois tubes 18, 19, 20.

La partie avant 18b du tube de base 18 et la partie basse 20b du tube de renfort 20 sont raccordées par une pièce 23 qui, dans l'exemple représenté aux figures 1 à 4, ne constitue pas l'un des sommets du triangle, mais constituerait plutôt un petit côté d'un quadrilatère dont les trois autres côtés seraient formés par les trois tubes 18, 19, 20. Bien sûr ce mode de réalisation n'est pas exclusif, la pièce 23 pouvant être une pièce de raccordement analogue à la pièce 22 entre le hauban 19 et le tube de renfort 20.

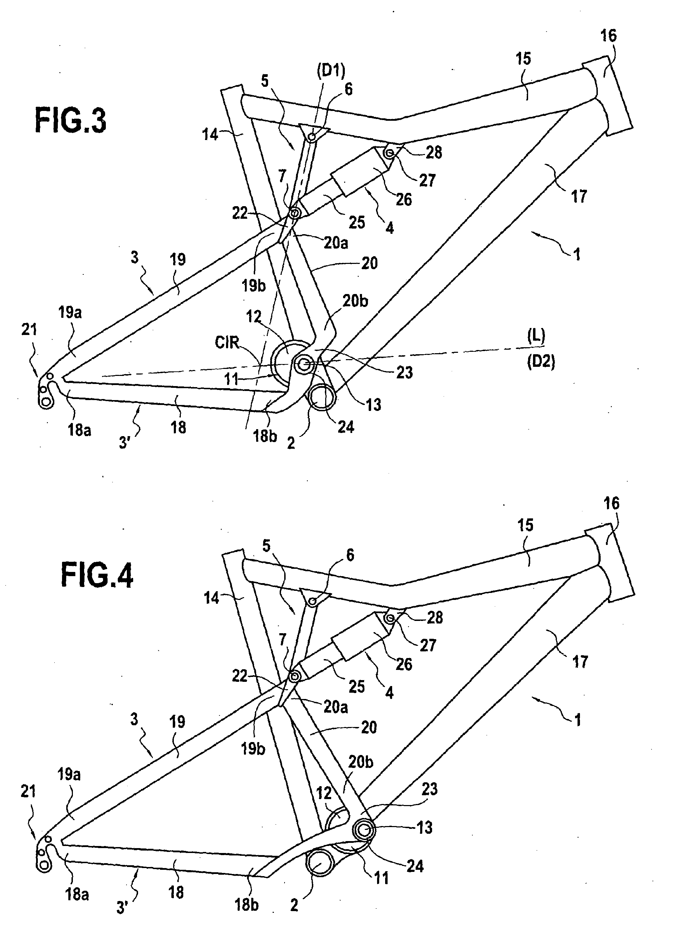

Cette pièce de raccord 23 peut être une pièce distincte des tubes de renfort 20 et de base 18, comme représenté aux figures 3 et 4, ou bien constituer un prolongement ou l'extrémité du tube de base 18, comme représenté aux figures 1 et 2.

L'ensemble arrière oscillant 3 est relié au châssis avant 1 par deux liaisons pivotantes 5 et 8 et par un système amortisseur 4.

La liaison pivotante inférieure 8 peut être constituée par un excentrique circulaire 11, comme représenté aux figures 3 et 4, ou par une simple bielle 8, comme représenté aux figures 1 et 2.

Dans les deux cas, cette liaison pivotante inférieure 8 présente un point de pivot arrière 9 et un point de pivot avant 10.

Le point de pivot arrière 9 relie la liaison pivotante inférieure 8 au châssis avant 1, à proximité de l'extrémité inférieure du tube de selle 14 dans les exemples représentés respectivement aux figures 1 et 3 (liaison non référencée sur la figure 3).

Dans les exemples représentés respectivement aux figures 2 et 4, le point de pivot arrière 9 relie la liaison pivotante inférieure 8 au châssis avant 1 à proximité de l'extrémité inférieure ou extrémité arrière du tube diagonal 17 (liaison non référencée sur la figure 4).

Le point de pivot avant 10 relie quant à lui la liaison pivotante inférieure 8 à l'ensemble arrière oscillant 3, au niveau de ou à proximité de la jonction entre la pièce 23, qui raccorde le tube de base 18 et le tube de renfort 20, et la partie inférieure du tube de renfort 20.

Dans le cas des modes de réalisation avec excentrique circulaire 11, tels que représentés aux figures 3 et 4, le point de pivot avant 10 est confondu avec l'axe excentré 13.

Par ailleurs, la liaison pivotante supérieure 5 est constituée d'une bielle 5, qui peut être formée par une simple plaque disposée dans le plan médian du châssis avant 1 ou parallèlement à celui-ci.

Cette liaison pivotante supérieure 5 présente un point de pivot haut 6 et un point de pivot bas 7.

Le point de pivot haut 6 relie la liaison pivotante supérieure 5 au châssis avant 1, par l'intermédiaire d'une pièce support 29 (de type support en « U », ou encore formé de deux pattes latérales, encadrant le point pivot haut 6), à proximité de l'extrémité arrière du tube supérieur 15, donc à proximité de la jonction de ce tube supérieur 15 avec le tube de selle 14.

Le point de pivot bas 7 relie quant à lui la liaison pivotante supérieure 5 à l'ensemble arrière oscillant 3 au niveau de ou à proximité de la pièce 22 formant raccord entre le hauban 19 et le tube de renfort 20.

Dans le cas des modes de réalisation représentés aux figures 3 et 4, l'excentrique circulaire 11 comprend un boîtier 12, mobile en rotation autour d'un axe perpendiculaire au plan médian du châssis 1, et portant un axe excentré 13. Cet axe excentré 13, porté par le boîtier 12, dépasse de part et d'autre du châssis avant 1 et est rendu solidaire de l'ensemble arrière oscillant 3 par une liaison pivot 24.

On peut se référer au document FR 2 827 831 pour des détails de réalisation supplémentaires relatifs à l'excentrique circulaire 11 et son montage.

Le système amortisseur 4 est constitué par un vérin 4 dont le corps 26 est fixé au châssis avant 1 par une liaison pivot 27 et dont la tige 25 est fixée à l'ensemble arrière oscillant 3 par une autre liaison pivot. Dans l'exemple illustré aux figures 1 à 4, la tige 25 du vérin 4 est fixée à la même liaison à pivot que l'extrémité inférieure de la bielle 5 avec l'ensemble arrière oscillant 3, c'est-à-dire au point de pivot bas 7. Comme pour la bielle 5, le corps du vérin 26 est fixé au tube supérieur 15 par une pièce support 28, de type support en « U », ou encore formé de deux pattes latérales, encadrant le point pivot 27.

Dans ce mode de réalisation, le plan de la bielle 5 est légèrement décalé par rapport au plan médian du châssis avant 1.

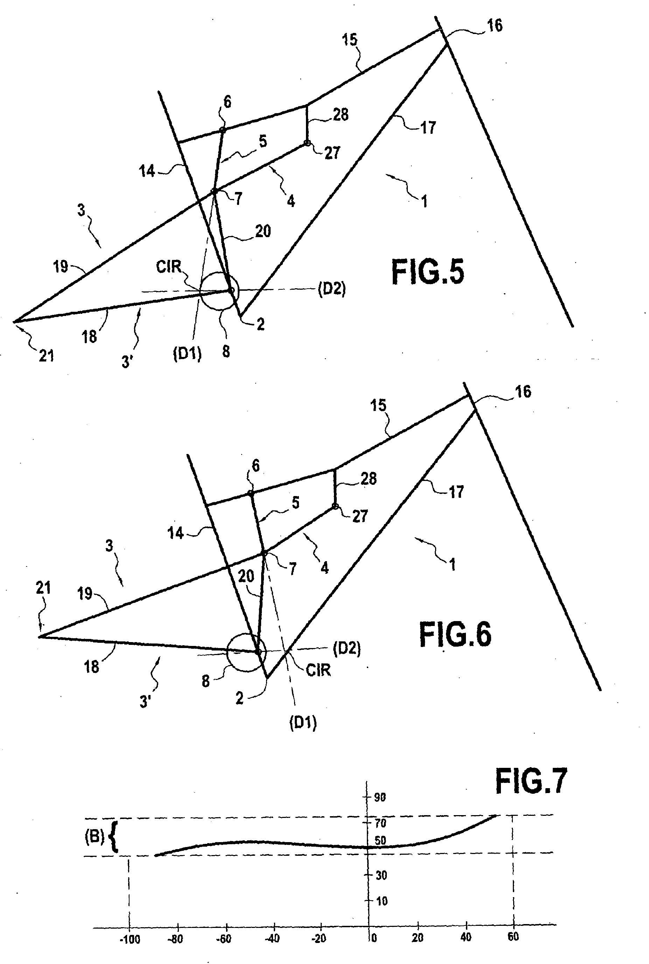

De manière classique, comme dans toute suspension arrière, le débattement de la roue arrière est limité par la course du système amortisseur 4, en l'occurrence du vérin 4. En position statique, c'est-à-dire le VTT étant au repos, sans aucune charge supplémentaire, la tige 26 du vérin a sa longueur sortie maximale. Dans cette disposition, qui est illustrée à la figure 5, la direction d'action de la tige 25 du vérin 4 est sensiblement dans le prolongement des haubans 19 de l'ensemble arrière oscillant 3.

Lorsque le VTT est dans un état statique chargé, tel qu'illustré à la figure 6, ne supportant que le poids d'un utilisateur moyen, on obtient, au niveau du vérin 4, un débattement de l'ordre de 25 %. En d'autres termes, la distance entre les deux liaisons pivot 7, 27 diminue de 25% par rapport à sa valeur dans l'état statique non chargé. Du fait de ce déplacement de la tige 25 dans le corps 26 du vérin 4, on obtient corrélativement un débattement de l'élément arrière oscillant 3 par le double pivotement d'une part du point de pivot avant 10 de la liaison pivotante inférieure 8 (axe excentré 13 dans les modes de réalisation illustrés aux figures 3 et 4) et d'autre part de la bielle 5 ou liaison pivotante supérieure 5, entraînant également une variation de l'angle entre la direction d'action de la tige 25 du vérin 4 et l'axe le long duquel s'étend le tube supérieur 15 ou une partie de ce tube supérieur 15 lorsque ce dernier est angulé.

On peut constater que lors de la compression du système amortisseur 4, la liaison pivotante supérieure 5 oscille par rapport au châssis avant 1. Cette oscillation se fait autour d'un axe (M) passant par le point de pivot haut 6, sensiblement perpendiculaire à la ligne de chaîne (L), c'est-à-dire la ligne le long de laquelle les brins de chaîne s'alignent.

Le centre instantané de rotation CIR est défini comme étant le point d'intersection de la droite (D1) passant par les deux points de pivot haut 6 et bas 7 et la droite (D2) passant par les deux points de pivot arrière 9 et avant 10. Sur la figure 1, cette droite (D2) est quasi-confondue avec la ligne de chaîne (L).

Plus généralement, cette droite (D2) est sensiblement parallèle à la ligne de chaîne (L).

Ce centre instantané de rotation CIR se déplace de l'arrière vers l'avant du VTT au cours de la compression du système amortisseur 4, dans une bande (B) sensiblement parallèle à et à distance minimale de la ligne de chaîne (L), tel qu'illustré à la figure 7. L'origine du graphique représenté à la figure 7 correspond à l'axe du boîtier de pédalier 2 et les graduations en abscisse et en ordonnée sont exprimées en mm.

Sur ce graphique, la ligne de chaîne (L) correspond à une droite sensiblement horizontale croisant l'axe des ordonnées à proximité de la graduation 50 mm ou, éventuellement, entre la graduation 50 mm et la graduation 90 mm en fonction du plateau (petit, moyen, grand) sur lequel on veut plus particulièrement placer l'effet anti-pompage.

L'effet de pompage s'en trouve réduit, contrairement à ce qui se passe dans les dispositifs de l'état de la technique, pour lesquels le déplacement du (CIR) se fera de l'avant vers l'arrière, en sortant éventuellement de cette bande (B), induisant alors trop d'effet de pompage.

Dans les exemples illustrés ci-dessus, le point de pivot arrière 9 est situé entre deux droites (non représentées aux figures 1 à 6) sensiblement parallèles à la ligne de chaîne (L), qui sont respectivement tangentes au plus petit et au plus grand plateaux de chaîne (également non représentés aux figures 1 à 6). Ces deux droites correspondent respectivement à la limite supérieure et à la limite inférieure de la bande (B) sur le graphique de la figure 7.

On constate que pendant les 25, voire même les 30, premiers pourcents de la compression du système amortisseur 4, le CIR reste en arrière de l'axe du boîtier de pédalier 2.

II est rappelé que l'ensemble de la description ci-dessus est donné à titre d'exemple et n'est pas limitatif de l'invention, en particulier en ce qui concerne la forme et les dimensions spécifiques des différents éléments du dispositif de l'invention.

## Revendications

1. Véhicule à deux roues, notamment bicyclette ou VTT, équipé d'une suspension arrière, comportant un châssis avant (1) portant un boîtier de pédalier (2), et un ensemble arrière oscillant (3) portant une roue arrière motrice, ledit ensemble arrière oscillant (3) étant solidaire dudit châssis avant (1) par un système amortisseur (4), une liaison pivotante supérieure (5) présentant un point de pivot haut (6) et un point de pivot bas (7), et une liaison pivotante inférieure (8) présentant un point de pivot arrière (9) et un point de pivot avant (10),
- le point de pivot haut (6) reliant ladite liaison pivotante supérieure (5) audit châssis avant (1),
- le point de pivot bas (7) reliant cette dite liaison pivotante supérieure (5) audit ensemble oscillant arrière (3), **caractérisé en ce que** :
- le point de pivot arrière (9) relie ladite liaison pivotante inférieure (8) audit châssis avant (1),
- le point de pivot avant (10) relie ladite liaison pivotante inférieure (8) audit ensemble oscillant arrière (3),
de sorte que, en cours de compression dudit système amortisseur (4), ladite liaison pivotante supérieure (5) oscille, par rapport audit châssis (1), autour d'un axe (M) sensiblement perpendiculaire à la ligne de chaîne (L), et la trajectoire du point d'intersection (CIR) entre la droite (D1) passant par les deux points pivot haut (6) et bas (7) et la droite (D2) passant par les deux points pivot arrière (9) et avant (10) se déplace de l'arrière vers l'avant dudit véhicule dans une bande (B) sensiblement parallèle à et à distance minimale de ladite ligne de chaîne (L).

2. Véhicule selon la revendication 1, **caractérisé en ce que** la droite (D2) passant par les deux points de pivot arrière (9) et avant (10) est sensiblement parallèle à la ligne de chaîne (L).

3. Véhicule selon l'une quelconque des revendication 1 et 2, **caractérisé en ce que** la liaison pivotante inférieure (8) est formée par un excentrique circulaire (11) constitué dans un boîtier (12) portant un axe excentré (13), ou par une bielle (8).

4. Véhicule selon l'une quelconque des revendication 1 à 3, **caractérisé en ce que** le point de pivot arrière (9) est situé entre deux droites sensiblement parallèles à la ligne de chaîne (L), tangentes respectivement au plus petit et au plus grand plateau de chaîne.

5. Véhicule selon l'une quelconque des revendication 1 à 4, **caractérisé en ce que** le point intersection (CIR) entre la droite passant par les deux points pivot haut (6) et bas (7) et la droite passant par les deux points pivot arrière (9) et avant (10), reste en arrière de l'axe du boîtier de pédalier (2) pendant les 30, de préférence les 25, premiers pourcents de la compression du système amortisseur (4).

6. Véhicule selon l'une quelconque des revendication 1 à 5, **caractérisé en ce que** la liaison pivotante supérieure (5) est formée par une bielle (5).

7. Véhicule selon l'une quelconque des revendication 1 à 6, **caractérisé en ce que** le point de pivot haut (6) se trouve à proximité de l'extrémité arrière du tube supérieur (15) formant partie supérieure avant du châssis avant (1).

8. Véhicule selon l'une quelconque des revendication 1 à 7, **caractérisé en ce que** le point de pivot bas (7) se trouve au niveau de ou à proximité de la jonction entre le hauban (19) formant partie supérieure arrière de l'ensemble arrière oscillant (3), et le tube de renfort (20) formant partie supérieure avant dudit ensemble oscillant arrière (3).

9. Véhicule selon l'une quelconque des revendication 1 à 8,
**caractérisé en ce que** le point de pivot arrière (9) se trouve à proximité de l'extrémité inférieure soit du tube de selle (14) formant partie arrière du châssis avant (1), soit du tube diagonal (17) formant partie inférieure avant dudit châssis avant (1).

10. Véhicule selon l'une quelconque des revendication 1 à 9, **caractérisé en ce que** le point de pivot avant (10) se trouve à proximité de ou au niveau de la jonction entre le tube de renfort (20) formant partie avant de l'ensemble arrière oscillant (3) et le tube de base (18) formant partie inférieure arrière dudit ensemble arrière oscillant (3).

## Claims

1. A two-wheeled vehicle, in particular a bicycle or a mountain bike, equipped with rear suspension and including a front chassis (1) equipped with a bottom bracket wheel (2), and a rear oscillating assembly (3) equipped with a rear drive wheel, with the said rear oscillating assembly (3) being attached to the said front chassis (1) by a shock-absorber system (4), by a top pivoting link (5) having a top pivot point (6) and a bottom pivot point (7), and by a bottom pivoting link (8) having a rear pivot point (9) and a front pivot point (10),
- the top pivot point (6) connecting the said top pivoting link (5) to the said front chassis (1),
- the bottom pivot point (7) connecting this said top pivoting link (5) to the said rear oscillating assembly (3),
**characterised in that** :
- the rear pivot point (9) connects the said bottom pivoting link (8) to the said front chassis (1),
- the front pivot point (10) connects the said bottom pivoting link (8) to the said rear oscillating assembly (3),
so that, during the compression of the said shock-absorber system (4), the said top pivoting link (5) oscillates, in relation to the said chassis (1), about an axis (M) that is more-or-less perpendicular to the chain line (L), and the trajectory of the point of intersection (ICR) between the straight line (D1) passing through the two top (6) and bottom (7) pivot points and the straight line (D2) passing through the two rear (9) and front (10) pivot points moves from the rear toward the front of the said vehicle within a band (B) that is more-or-less parallel to and at a minimum distance from the said chain line (L).

2. The vehicle according to claim 1, **characterised in that** the straight line (D2) passing through the two rear (9) and front (10) pivot points is more-or-less parallel to the chain line (L).

3. The vehicle according to either of claims 1 and 2,
**characterised in that** the bottom pivoting link (8) takes the form of a circular eccentric part (11) in the form of a canister (12) that supports an eccentric axle (13), or by a connecting rod (8).

4. The vehicle according to any of claims 1 to 3,
**characterised in that** the rear pivot point (9) is located between two straight lines that are more-or-less parallel to the chain line (L), and respectively tangential to the smallest and to the largest chain sprocket wheel.

5. The vehicle according to any of claims 1 to 4,
**characterised in that** the intersection point (ICR) between the straight line passing through the two top (6) and bottom (7) pivot points and a straight line passing through the two rear (9) and front (10) pivot points, remains behind the axis of the bottom bracket wheel (2) during the first 30%, and preferably the first 25%, of the compression of the shock-absorber system (4).

6. The vehicle according to any of claims 1 to 5
**characterised in that** the top pivoting link (5) takes the form of a connecting rod (5).

7. The vehicle according to any of claims 1 to 6,
**characterised in that** the top pivot point (6) is located close to the rear end of the top tube (15) forming the top front part of the front chassis (1).

8. The vehicle according to any of claims 1 to 7,
**characterised in that** the bottom pivot point (7) is located at or close to the junction between the strut (19) forming the top rear part of the rear oscillating assembly (3), and the bracing tube (20) forming the top front part of the said rear oscillating assembly (3).

9. The vehicle according to any of claims 1 to 8,
**characterised in that** the rear pivot point (9) is located close to the bottom end either of the saddle tube (14) forming the rear part of the front chassis (1) or of the diagonal tube (17) forming the bottom front part of the said front chassis (1).

10. The vehicle according to any of claims 1 to 9,
**characterised in that** the front pivot point (10) is located close to or at the junction between the bracing tube (20) forming the front part of the rear oscillating assembly (3) and the base tube (18) forming the bottom rear part of the said rear oscillating assembly (3).

## Patentansprüche

1. Zweirädriges Fahrzeug, insbesondere Fahrrad oder MTB, das mit einer hinteren Federung ausgestattet ist, umfassend einen Vorderrahmen (1), der ein Kurbellagergehäuse (2) trägt, und eine hintere Schwenkeinheit (3), die ein hinteres Antriebsrad trägt, wobei die hintere Schwenkeinheit (3) über ein Dämpfungssystem (4), eine obere Schwenkverbindung (5), die einen oberen Drehpunkt (6) und einen unteren Drehpunkt (7) aufweist, sowie eine untere Schwenkverbindung (8), die einen hinteren Drehpunkt (9) und einen vorderen Drehpunkt (10) aufweist, fest mit dem Vorderrahmen (1) verbunden ist,
- wobei der obere Drehpunkt (6) die obere Schwenkverbindung (5) mit dem Vorderrahmen (1) verbindet,
- wobei der untere Drehpunkt (7) diese obere Schwenkverbindung (5) mit der hinteren Schwenkeinheit (3) verbindet,
**dadurch gekennzeichnet, daß**:
- der hintere Drehpunkt (9) die untere Schwenkverbindung (8) mit dem Vorderrahmen (1) verbindet,
- der vordere Drehpunkt (10) die untere Schwenkverbindung (8) mit der hinteren Schwenkeinheit (3) verbindet,
so daß während des Einfederns des Dämpfungssystems (4) die obere Schwenkverbindung (5) gegenüber dem Rahmen (1) um eine zur Kettenlinie (L) im wesentlichen senkrecht verlaufende Achse (M) verschwenkt und die Kurve des Schnittpunktes (CIR) zwischen der durch den oberen Drehpunkt (6) und den unteren Drehpunkt (7) verlaufenden Geraden (D1) und der durch den hinteren Drehpunkt (9) und den vorderen Drehpunkt (10) verlaufenden Geraden (D2) vom hinteren zum vorderen Teil des Fahrzeugs in einem Bereich (B) verläuft, der zu der Kettenlinie (L) im wesentlichen parallel ist und sich in minimalem Abstand von dieser befindet.

2. Fahrzeug nach Anspruch 1, **dadurch gekennzeichnet, daß** die durch den hinteren Drehpunkt (9) und den vorderen Drehpunkt (10) verlaufende Gerade (D2) im wesentlichen parallel zur Kettenlinie (L) verläuft.

3. Fahrzeug nach einem der Ansprüche 1 und 2, **dadurch gekennzeichnet, daß** die untere Schwenkverbindung (8) von einem Kreisexzenter (11), der aus einem eine exzentrische Achse (13) tragenden Gehäuse (12) besteht, oder von einer Stange (8) gebildet ist.

4. Fahrzeug nach einem der Ansprüche 1 bis 3, **dadurch gekennzeichnet, daß** der hintere Drehpunkt (9) zwischen zwei zur Kettenlinie (L) im wesentlichen parallel verlaufenden Geraden gelegen ist, die das kleinste bzw. das größte Kettenblatt tangieren.

5. Fahrzeug nach einem der Ansprüche 1 bis 4, **dadurch gekennzeichnet, daß** der Schnittpunkt (CIR) zwischen der durch den oberen Drehpunkt (6) und den unteren Drehpunkt (7) verlaufenden Geraden und der durch den hinteren Drehpunkt (9) und den vorderen Drehpunkt (10) verlaufenden Geraden während der ersten 30, vorzugsweise der ersten 25 % des Einfederns des Dämpfungssystems (4) hinter der Achse des Kurbellagergehäuses (2) bleibt.

6. Fahrzeug nach einem der Ansprüche 1 bis 5, **dadurch gekennzeichnet, daß** die obere Schwenkverbindung (5) von einer Stange (5) gebildet ist.

7. Fahrzeug nach einem der Ansprüche 1 bis 6, **dadurch gekennzeichnet, daß** der obere Drehpunkt (6) in der Nähe des hinteren Endes des oberen Rohrs (15), welches den oberen vorderen Teil des Vorderrahmens (1) bildet, gelegen ist.

8. Fahrzeug nach einem der Ansprüche 1 bis 7, **dadurch gekennzeichnet, daß** der untere Drehpunkt (7) im Bereich oder in der Nähe der Verbindung zwischen der den oberen hinteren Teil der hinteren Schwenkeinheit (3) bildenden Strebe (19) und dem den oberen vorderen Teil der hinteren Schwenkeinheit (3) bildenden Versteifungsrohr (20) gelegen ist.

9. Fahrzeug nach einem der Ansprüche 1 bis 8, **dadurch gekennzeichnet, daß** der hintere Drehpunkt (9) in der Nähe des unteren Endes entweder der Sattelstütze (14), welche den hinteren Teil des Vorderrahmens (1) bildet, oder des Diagonalrohrs (17), welches den unteren vorderen Teil des Vorderrahmens (1) bildet, gelegen ist.

10. Fahrzeug nach einem der Ansprüche 1 bis 9, **dadurch gekennzeichnet, daß** der vordere Drehpunkt (10) in der Nähe oder im Bereich der Verbindung zwischen dem Versteifungsrohr (20), welches den vorderen Teil der hinteren Schwenkeinheit (3) bildet, und dem Basisrohr (18), das den unteren hinteren Teil der hinteren Schwenkeinheit (3) bildet, gelegen ist.
